# EUROPÄISCHE PATENTANMELDUNG

(11) **EP 4 063 299 A1**
(43) Veröffentlichungstag der Anmeldung: **28.09.2022**
(21) Anmeldenummer: 21205591.7
(22) Anmeldetag: 29.10.2021
(51) Int. Cl.: B65G 1/04, B65G 1/137

(54) **HYBRID-LAGER EINES AUTOMATISCHEN WARENLAGERS**

(30) Priorität: 30.10.2020 DE 102020006667
(71) Anmelder: SMARK GmbH, 70174 Stuttgart (DE)
(72) Erfinder: Maximilian, EHRET, 70188 Stuttgart (DE)
(74) Vertreter: König Szynka Tilmann von Renesse Patentanwälte Partnerschaft mbB Düsseldorf

(57) **Zusammenfassung**

Die Erfindung betrifft ein automatisches Warenlager mit einem Regalbediengerät und einer Steuerung, dadurch gekennzeichnet, dass die Steuerung dazu ausgestaltet ist, die Ware einzeln oder auf bzw. in einem Warenträger im Regal abzulegen.

## Beschreibung

Die Erfindung betrifft ein automatisches Warenlager mit einem Regalbediengerät und einer Steuerung, ein Verfahren zum Betreiben eines automatischen Warenlagers mit einem Regalbediengerät mit einer Steuerung und eine Verwendung eines Regals eines automatischen Warenlagers mit einem Regalbediengerät und einer Steuerung.

Im Bereich der Kommissioniervorrichtungen, d. h. einer Vorrichtung zum Ein- und Auslagern von Artikeln, ist es bekannt, Regale zur Lagerung von Ware vorzusehen. Die Ware kann in einer Art eines Lagers auf Regalböden des Regals einzeln gelagert werden und wird im Falle einer Ein- bzw. Auslagerung vom Regalbediengerät vom Regalboden aufgenommen bzw. abgelegt. Ferner ist es in einer anderen Art eines Lagers bekannt, Ware, die in Behältern angeordnet ist, in einem Regal zu lagern, wobei der Behälter zum Ein- oder Auslagern vom Regalbediengerät gehandhabt werden kann. Aufgrund der unterschiedlichen Handhabung der Behälter auf der einen Seite und der einzelnen Ware auf der anderen Seite wurden diese Arten von Lagern als unvereinbar miteinander angesehen.

Ausgehend vom Stand der Technik liegt der Erfindung die Aufgabe zugrunde, ein automatisches Warenlager, ein Verfahren zum Betreiben eines automatischen Warenlagers und eine Verwendung eines Regal eines automatischen Warenlagers so weiterzuentwickeln, dass diese jeweils wirtschaftlicher betrieben werden können.

Diese Aufgabe wird durch die Gegenstände der unabhängigen Patentansprüche gelöst. Vorteilhafte Ausführungsform sind Gegenstand der jeweiligen abhängigen Patentansprüche und ergeben sich aus der Beschreibung.

Der Kern der Erfindung sieht vor, in einem Regal eines automatischen Warenlagers, welches ein Regalbediengerät umfasst, die Plätze auf Regalböden des Regals sowohl für Ware selbst als auch für Warenträger, auf bzw. in denen eine oder mehrere Waren angeordnet sein können, zu handhaben. Die Steuerung des Regalbediengeräts kann gemäß dem Kern der Erfindung derart ausgestaltet sein, die Ware einzeln oder auf bzw. in einem Warenträger im Regal abzulegen und/oder aufzunehmen. Das Regal dient damit sowohl für eine Lagerung der Ware, in dem diese einzeln auf einem Regalboden aufsteht, als auch einer Lagerung von Ware, die auf bzw. in einem Warenträger vorliegt. Erfindungsgemäß wurde mit der Vorstellung gebrochen, dass entweder die Ware einzeln oder die Ware in einem Behältnis im Regal angeordnet gelagert ist. Eine grundlegende flexible Handhabung ist möglich. Eine Beschleunigung des Ein- oder Auslagerns kann erreicht werden. Ferner ist mit der sich ergebenden Flexibilität eine Vergrößerung der für die Lagerung vorgesehenen Fläche bzw. des Volumens möglich, wobei eine einzelne Lagerung von Ware nicht ausgeschlossen ist. Nunmehr können die beiden Arten von Lagern, die bisher als nicht miteinander vereinbare Alternativen galten, da die Handhabung einer Ware bisher von der Handhabung eines Behälters, in dem mehrere Waren aufgenommen sind, als stark unterschiedlich und nicht miteinander kombinierbar angesehen wurde, vereint vorliegen.

Es kann sich ein wirtschaftlicherer Betrieb ergeben, da mit dem Regal ein Lager vorliegt, in welchem sowohl einzeln handhabbare Ware als auch an bzw. in einem Warenträger angeordnete Ware abgelegt werden kann. Die Ware kann einzeln oder zusammen mit dem Warenträger gehandhabt werden. Es kann auch vorgesehen sein, dass die Ware von dem Warenträger vereinzelt oder in, an und/oder auf dem Warenträger zu einem Warenkonvolut zusammengestellt werden kann.

Die Erfindung schafft ein automatisches Warenlager mit einem Regalbediengerät und einer Steuerung. Die Steuerung ist dazu ausgestaltet, die Ware einzeln oder auf bzw. in einem Warenträger im Regal abzulegen.

Im Sinne der Beschreibung ist ein automatisches Warenlager ein umschlossener Raum, der Ware, die in einem Regal angeordnet ist, enthält. Die Ware kann mittels eines oder mehrerer Einlagerfenster in das automatische Warenlager gelangen. Ferner kann das automatische Warenlager ein oder mehrere Auslagerfenster aufweisen, an denen Ware aus dem automatischen Warenlager ausgegeben werden kann. In der Regel weist das Einlagerfenster und das Auslagerfenster eine wahlweise abdeckbare und/oder verschließbare Öffnung auf, durch die Ware in das automatische Warenlager bzw. aus dem automatischen Warenlager gelangen kann. In einer Ausführungsform kann es vorgesehen sein, dass zumindest ein Einlagerfenster mit einem Auslagerfenster identisch sein kann. Zum Zwecke der Abdeckung und/oder des Verschlusses des Einlagerfensters und/oder des Auslagerfensters kann eine Türe, eine Klappe, ein Rollo, eine Jalousie oder ähnliches vorgesehen sein. Das Auslagerfenster und/oder das Einlagerfenster kann mittels einer von einer Klappe bedeckten Schublade oder einem trogförmigen Raum, der von einer Klappe oder einem Rollo bedeckt ist, zumindest teilweise gebildet werden.

Der Begriff "-fenster" umfasst im Sinne der Beschreibung eine nicht notwendigerweise vertikal ausgerichtete Öffnung. Es kann vorgesehen sein, dass eine horizontal ausgerichtete Öffnung bzw. eine Öffnung mit einer horizontal verlaufenden Komponente vorhanden ist, die sich einen Raum erstreckt, in den Ware abgelegt oder aus dem Ware entnommen werden kann.

Das Auslagerfenster kann insbesondere derart positioniert oder angeordnet sein und/oder im Bereich des Auslagerfensters kann es derart ausgestaltet sein, dass ein in das Auslagerfenster bewegter Warenträger vom Regalbediengerät gehandhabt werden kann. Der Warenträger kann insbesondere vom Regalbediengerät aufgenommen und wieder ins Regal auf einem Regalboden abgestellt werden, bspw. um wieder verwendet zu werden, insbesondere, wenn der die Ware anfordernde Benutzer auf die Mitnahme des Warenträgers verzichten möchte oder muss. Es ist alternativ oder zusätzlich möglich, dass der Warenträger im Bereich des Auslagerfensters nicht vom Regalbediengerät gehandhabt werden kann, sondern mittels einer Transporteinrichtung wieder in den Handhabungsbereich des Regalbediengeräts verfahren werden muss, sofern der Warenträger im Auslagerfenster nicht entnommen wurde oder nicht entnommen werden kann. Die Transporteinrichtung kann den Warenträger in den Handhabungsbereich des Regalbediengeräts bewegen und dieses kann den Warenträger in das Regal zurücklegen. Es kann möglich sein, dass ein Warenträger nicht wieder dem Regal zugeführt wird, bspw., wenn festgestellt wird, dass der Warenträger verschmutzt, defekt oder in sonstiger Weise nicht mehr brauchbar ist. Es ist möglich, dass ein im Auslagerfenster befindlicher Warenträger zunächst nicht wieder in das Regal bewegt wird, sondern auf einen Beschickungsplatz, der dem Auslagerfenster vorgelagert ist und auf den ein Anwender nicht von außen zugreifen kann. Auf dem Beschickungsplatz kann der Warenträger wieder mit Ware versehen werden und dann ausgelagert oder wieder dem Regal zugeführt werden; hierdurch ergibt sich die Möglichkeit, den Warenträger wieder zu verwenden, ohne ihn zuvor in das Regal zu transportieren.

Der Zugang bzw. Zugriff auf den umschlossenen Raum kann reglementiert sein, damit nicht unautorisiert auf die in dem Warenlager befindliche Ware und/oder das Regalbediengerät zugegriffen werden kann. Es kann vorgesehen sein, dass der umschlossene Raum zumindest in einem Teilbereich eine Kühlung und/oder Klimatisierung mit einer Einstellung einer Luftfeuchte für die im Raum befindliche Luft aufweist, um an die Ware angepasste, verbesserte Lagerbedingungen zu schaffen.

Der umschlossene Raum kann mechanische und/oder elektrische bzw. elektronische Zu- oder Ableitungen aufweisen. Mittels der mechanischen Zu- oder Ableitungen kann eine Lüftung des umschlossenen Raums durchgeführt werden. Sofern Kühl- oder Klimatisierungsaggregate vorgesehen sind, kann die Luft in dem umschlossenen Raum zumindest in einem Teilbereich gekühlt oder klimatisiert werden, wobei im Falle einer Klimatisierung eine Einstellung der Luftfeuchte umfasst ist. Sofern mindestens ein Kühl- oder Klimatisierungsaggregat vorgesehen ist, kann das Kühl- oder Klimatisierungsaggregat Teil des umschlossenen Raums sein. Mittels der elektrischen Zuleitungen können elektrische Komponente des Warenlagers, insbesondere das Regalbediengerät und die Steuerung mit Strom versorgt werden. Mittels der elektronischen Zu- bzw. Ableitungen können elektronische Elemente des Warenlagers mit Signalen versorgt bzw. Signale von den elektronischen Komponenten nach außen gesendet werden. Es kann vorgesehen sein, dass der umschlossene Raum bis auf eine Zuleitung für Strom bzw. Spannung unabhängig bzw. autark ausgestaltet ist.

Das automatische Warenlager kann eine Schnittstelle aufweisen, die eine bidirektionale Kommunikation zwischen der Steuerung des Regalbediengeräts und möglichen weiteren elektronischen Komponenten des automatischen Warenlagers ermöglicht. Die Steuerung des Regalbediengeräts kann beispielsweise auch zur Steuerung weiterer elektrischer und/oder elektronischen Komponenten (bspw. Kühl- oder Klimaaggregat) verwendet werden. Es kann aber auch eine separate Steuerung für das automatische Warenlager vorgesehen sein, die die weiteren elektrischen und/oder elektronischen Komponenten, die in der Beschreibung genannt werden, steuert. Eine mögliche von der Steuerung des Regalbediengeräts separate Steuerung kann der Steuerung des Regalbediengeräts übergeordnet sein. Die Schnittstelle kann eine kabellose und/oder eine kabelgebundene Kommunikation ermöglichen. Mittels der Schnittstelle können Einstellungen der Steuerung(en) ausgelesen und/oder verändert werden.

Der umschlossene Raum kann stationär angeordnet sein oder mobil beweglich, beispielsweise auf einer Plattform eines Fahrzeugs, vorliegen.

Beim Einlagern kann das Regalbediengerät die Ware im Bereich des Einlagerfensters aufnehmen und dem Regal zuführen. Bei der Auslagerung kann das Regalbediengerät die Ware und/oder einen Warenträger, der die Ware aufweist, im Regal aufnehmen und dem Auslagerfenster zuführen.

Im Bereich des Einlagerfensters kann eine optische Einrichtung vorgesehen sein, die ausgerichtet und ausgestaltet ist, Bilder und/oder Filme von der einzulagernden Ware bzw. vom einzulagernden Gut aufnehmen zu können. Vorzugsweise können die Bilder und/oder Filme gespeichert werden, um klären zu können, ob, wann und/oder in welchem Zustand die Ware bzw. das Gut eingelagert wurde.

Es ist auch möglich, dass auf eine Einlagerung mittels eines Einlagerfensters verzichtet werden kann, wenn die Ware manuell über einen anderen Zugang in den umschlossenen Raum in das Regal eingebracht werden kann, bspw. durch einen Mitarbeiter, der die Ware in das Regal stellt; hierzu kann ein Zugang für den Mitarbeiter vorgesehen sein, der mittels einer Zugangsberechtigungseinrichtung gesperrt bzw. überwacht werden kann. Bei der Zugangsberechtigungseinrichtung kann es sich um einen (elektronischen) Schlüssel, eine Magnetkarte, eine RFID-Karte, eine Gesichts- und/oder Stimmerkennung oder ähnliches handeln.

Der umschlossene Raum kann eine Tür für Wartungsarbeiten aufweisen, um einem Servicemitarbeiter insbesondere einen Zugang zu dem Regal oder dem Regalbediengerät gewähren zu können.

Bei dem automatischen Warenlager kann es sich allgemein um ein Lager handeln, bei dem ein Kunde ein in dem Warenlager befindliches Gut anfordern und an einem Auslagerfenster entnehmen kann.

Bei der Ware kann es sich um jedes gegenständliche Gut handeln, insbesondere Lebensmittel, Genussmittel, Nahrungsmittel, Süßwaren, Drogerieartikel, Büromaterial oder andere Gebrauchs- oder Verbrauchsgüter. Eine Ware kann jedwede körperliche Ausgestaltung aufweisen, die eine handhabbare Erstreckung umfasst. Bei der Ware kann es sich auch um ein Gut bzw. eine Ware handeln, das bzw. die vor der Ausgabe gegenüber dem Zustand im Regal modifiziert ist, beispielsweise indem die Ware bzw. das Gut für eine Erzeugung eines Lebensmittels geöffnet (z.B. eine Flasche), geschält (z.B. Obst), befüllt (z.B. ein leeres Behältnis, bspw. ein Becher, wird mit einem Getränk, bspw. Kaffee oder Limonade, gefüllt oder eine Ware wird in einem Geschenkkorb platziert), verpackt (z.B. eine Ware wird in einen (Geschenk-)Karton, eine Kiste oder eine Tüte gepackt), aufgebrüht (z.B. Kaffee), erwärmt (z.B. gekühlte Kost auf Raumtemperatur erwärmen), erhitzt (z.B. Suppe) oder aufgebacken (z.B. Backware) wurde, bevor das modifizierte Gut bzw. die modifizierte Ware ausgegeben wird.

Das automatische Warenlager kann ein Verkaufsautomat sein, der Ware enthält, die ein Kunde auswählen, bezahlen und am Auslagerfenster übergeben bekommt.

Alternativ oder zusätzlich kann das automatische Warenlager ein Übergabeautomat oder Serviceautomat sein, mit dem sichergestellt werden kann, dass sich einlagernde und auslagernde Person nicht persönlich treffen bzw. begegnen müssen und trotzdem eine sichere Übergabe - gegebenenfalls mit zusätzlichen Bedingungen - erfolgen kann. Es kann beispielsweise alternativ oder zusätzlich zu der Funktion des Verkaufsautomaten vorgesehen sein, dass ein Unternehmen und/oder eine Privatperson die Möglichkeit erhalten, einen Gegenstand bzw. ein Gut in das automatische Warenlager einzulagern, und einer weiteren Person die Möglichkeit einräumen, den Gegenstand bzw. das Gut aus dem automatischen Warenlager zu erhalten. Bei dem Unternehmen oder der Privatperson kann es sich beispielsweise um einen Verkäufer einer Sache handeln, wobei die Einigung über den Verkauf und die Bezahlung schon erfolgt ist. Es kann alternativ oder zusätzlich vorgesehen sein, dass ein Brief-, Päckchen- oder Paketzusteller (zuzustellender Gegenstand) ferner die Möglichkeit erhält, das automatische Warenlager zu nutzen. Der Zusteller kann einen einem Empfänger zuzustellenden Gegenstand in dem Warenlager einlagern, damit der Empfänger sich den Gegenstand aus dem Warenlager abholen kann.

Es kann vorgesehen sein, dass das automatische Warenlager die Funktion eines Verkaufsautomaten hat und gleichzeitig den Käufern einer oder mehrerer Waren die Möglichkeit gegeben wird, dass Gegenstände für eine Übergabe und/oder zuzustellende Gegenstände aus dem Warenlager abgeholt werden können, sofern der Steuerung bei der Einlagerung mitteilt wird, dass eine bestimmte Person zur Auslagerung berechtigt ist.

Im Bereich des Einlagerfensters kann ein von außen zugängliches Einlagerterminal vorgesehen sein, das erkennt, ob eine Person berechtigt ist, Ware bzw. einen Gegenstand in das automatische Warenlager einzulagern. Das Einlagerterminal kann ein Kartenlesegerät, einen optischen Scanner, einen elektronischen Sensor, eine Gesichts- und/oder Stimmerkennung oder ähnliches aufweisen. Wird erkannt, dass die Person zur Einlagerung von Ware bzw. eines Gegenstands berechtigt ist, kann durch eine Öffnung eine Ware bzw. ein Gut dem automatischen Warenlager zugeführt werden, indem das Regalbediengerät im Bereich des Einlagerfensters die Ware bzw. das Gut aufnimmt und dem Regal zuführt. Zwischen dem Einlagerfenster und einem Zugriffsbereich des Regalbediengeräts kann eine Fördereinrichtung vorgesehen sein, die die Ware bzw. das Gut zwischen dem Einlagerfenster und dem Zugriffsbereich des Regalbediengeräts bewegt. Die Fördereinrichtung kann als Förderband oder ähnliches ausgestaltet sein.

Zur Erkennung der Ware bzw. des Guts kann eine Erkennungseinrichtung vorgesehen sein, die insbesondere am Regalbediengerät angeordnet sein kann, um zu erkennen, um welche Ware bzw. welches Gut es sich handelt. Die Erkennungseinrichtung kann ausgestaltet sein, die Größe, Form, Geometrie und/oder das Gewicht der Ware bzw. des Guts zu ermitteln, zu erfassen bzw. zu erkennen. Hierdurch kann festgestellt werden, ob die einzulagernde Ware bzw. das einzulagernde Gut mittels des Regalbe-diengeräts gehandhabt werden kann. Es kann alternativ oder zusätzlich festgestellt werden, ob die Ware bzw. das Gut eine Größe bzw. ein Volumen aufweist, die bzw. das eine Einlagerung im Regal ermöglicht, bspw. weil die Regalböden einen ausreichenden Abstand in der Höhe haben und/oder auf einem Regalboden noch ausreichend Fläche vorhanden ist. Die Erkennungseinrichtung kann ausgestaltet sein, einen an der Ware bzw. dem Gut angeordneten (Strich-)Code zu erkennen. Alternativ oder zusätzlich kann vorgesehen sein, dass die die Ware bzw. das Gut einlagernde Person Angaben über die Ware bzw. das Gut machen kann. Die Angaben über die Ware bzw. das Gut können insbesondere Informationen zur Identifizierung der Ware bzw. des Guts sein. Die einlagernde Person kann insbesondere bei einem Verkaufsautomaten Angaben dazu machen, welches Produkt eingelagert wird. Die einlagernde Person kann alternativ oder zusätzlich Angaben dazu machen, zu welchem Preis die Ware bzw. das Gut verkauft werden und dann ausgelagert werden soll. Sofern das automatische Warenlager alternativ oder zusätzlich als Servicestation für eine Einlagerung und Auslagerung von Gegenständen verwendet werden kann, kann die einlagernde Person Angaben zum Empfänger bzw. der Person bzw. dem Personenkreis machen, dem die Ware bzw. das Gut ausgegeben werden darf.

Das Einlagerterminal im Bereich des Einlagerfensters kann für mögliche Eingaben einer einlagernden Person eine optische Erkennungseinheit, eine Tastatur, eine Anzeige, einen Bildschirm, eine Eingabemöglichkeit mittels einer Maus, eines Touchpads, eines Touchscreens und/oder eines Trackballs oder ähnlichem aufweisen. Es kann ferner eine elektronische kabelgebundene oder kabellose Schnittstelle vorgesehen sein, mittels derer eine einlagernde Person elektronische Informationen an die Steuerung des automatischen Warenlagers übergeben kann, um Informationen zur einzulagernden Ware bzw. Gut zu machen. Mittels der Schnittstelle kann auch eine bidirektionale Kommunikation mit der einlagernden Person durchgeführt werden, indem der Person, die sich identifiziert hat, mitgeteilt wird, welche und wie viele Waren bzw. Güter, die die Person zuvor schon eingelagert hatte, ausgelagert worden sind. Alternativ oder zusätzlich kann einer einlagernden Person auch kabellos eine Information auf ein Endgerät übermittelt werden, die angibt, welche und wie viele Waren bzw. Güter ausgegeben wurden und/oder welche Ware bzw. Güter noch im automatischen Warenlager vorhanden sind.

Im Bereich des Auslagerfensters kann eine optische Einrichtung vorgesehen sein, die ausgerichtet und ausgestaltet ist, Bilder und/oder Filme von der auszulagernden Ware bzw. vom auszulagernden Gut aufnehmen zu können. Vorzugsweise können die Bilder und/oder Filme gespeichert werden, um zu klären, ob, wann und/oder in welchem Zustand die Ware bzw. das Gut ausgegeben wurde.

Im Bereich des Auslagerfensters kann ein Auslagerterminal vorgesehen sein, das eine Identifikation einer Person ermöglicht. Die Einrichtung kann alternativ oder zusätzlich für die Autorisierung einer Bezahlung, insbesondere der auszulagernden Ware, ausgestaltet sein. Beispielsweise kann an dem Auslagerfenster ein Auslagerterminal mit Bezahlfunktion zur Bezahlung der Ware bzw. Guts, welche(s) von einer Person für eine Auslagerung angefordert werden, vorgesehen sein.

Das Auslagerterminal kann ein Kartenlesegerät, einen optischen Scanner, einen elektronischen Sensor, eine Gesichts- und/oder Stimmerkennung oder ähnliches aufweisen. Wird erkannt, dass die Person zur Auslagerung von Ware bzw. eines Gegenstands berechtigt ist, kann durch das geöffnete Auslagerfenster die Ware bzw. das Gut dem automatischen Warenlager entnommen werden, indem zuvor das Regalbediengerät die Ware bzw. das Gut vom Regal aufgenommen und einem Ablagebereich im Bereich des Auslagerfenster abgelegt hat. Zwischen dem Auslagerfenster und dem Ablagebereich des Regalbediengeräts kann eine Fallstrecke, ein Fallschacht oder eine Fördereinrichtung vorgesehen sein, entlang der bzw. dem die Ware bzw. das Gut zwischen dem Ablagebereich und dem Auslagerfenster bewegt wird. Die Fördereinrichtung kann als Förderband oder ähnliches ausgestaltet sein. Der Ablagebereich des Regalbediengeräts kann alternativ direkt in einem Zugriffsbereich von außen vorliegen.

Die Anforderung der Ware durch die Person kann vor der Auslagerung mittels einer an die Steuerung des automatischen Warenlagers übermittelten Bestellung in Form einer Anforderung von Ware aus dem Warenlager geschehen, die beispielsweise mittels einer auf einem Smartphone ablaufenden App, eines Computers oder ähnlichem vorgenommen wird.

Das Auslagerterminal im Bereich des Auslagerfensters kann für mögliche Eingaben einer Person, die Ware ausgelagert haben möchte, eine optische Erkennungseinheit, eine Tastatur, eine Anzeige, einen Bildschirm, eine Eingabemöglichkeit mittels einer Maus, eines Touchpads, eines Touchscreens und/oder eines Trackballs oder ähnlichem aufweisen. Mittels der Eingabe kann Ware angefordert werden. Es kann eine Kommunikation mit der Person durchgeführt werden, in der die Person die auszulagernde Ware auswählt und bezahlt. Es ist aber alternativ oder zusätzlich möglich, dass das Auslagerungsterminal lediglich die Peron oder eine Berechtigung erkennt, die die Ausgabe der entsprechenden Ware auslöst.

Ein Regalbediengerät kann einen Manipulator für die Aufnahme und Ablage von Ware umfassen. Bei dem Manipulator kann es sich insbesondere um jedwede Einrichtung zum Erfassen, Halten und/oder Ablegen einer Ware bzw. eines Guts handeln. Insbesondere kann es sich bei dem Regalbediengerät um ein Regalbediengerät handeln, welches mechanisch, pneumatisch, magnetisch oder adhäsiv mit der Ware bzw. dem Gut zusammenwirken kann. Bei dem Regalbediengerät kann es sich um ein Regalbediengerät handeln, welches einen Parallel-, Radial-, Winkel-, Dreipunkt- und/oder Sauggreifer umfasst. In einer bevorzugten Ausführungsform kann das Regalbediengerät ein mechanischer Greifer, insbesondere ein Klemmgreifer, ganz besonders bevorzugt ein Backengreifer, sein.

Die Steuerung ermöglicht eine gezielte Steuerung des Regalbediengeräts, wobei mehrere Regalbediengeräte vorgesehen sein können, die von einer Steuerung angesteuert werden können. Die Steuerung kann zudem ausgelegt sein, ein oder mehrere Einlagerterminals und/oder ein oder mehrere Auslagerterminals zu steuern.

Die Steuerung kann einen Speicher aufweisen, in dem Angaben über in dem Warenlager befindliche Ware, Warenträger und/oder Gut abgelegt ist. Mittels der Angaben in dem Speicher kann eine Identifizierung der Ware, des Warenträgers und des Guts erfolgen, wobei die der Ware, dem Warenträger bzw. dem Gut zugeordnete Position im Warenlager ebenfalls im Speicher abgelegt sein kann.

Der Begriff Steuerung umfasst eine elektronische Einheit, die eine in einem Speicher abgelegte Befehlsreihenfolge, insbesondere in Form eines Programms, abarbeiten kann, um den Betrieb des Regalbediengeräts und/oder des automatischen Warenlagers zu ermöglichen. Insbesondere kann die Steuerung eine Befehlsfolge umfassen, die das Regalbediengerät für die Ein- und/oder Auslagerung einer Ware bzw. eines Warenträgers ansteuert. Mittels der Steuerung kann eine Befehlsfolge im Speicher vorgegeben bzw. in den Speicher eingebracht werden, die eine Handhabung der Ware einzeln oder auf bzw. in einem Warenträger im Regal ermöglicht. Sofern eine Befehlsfolge beschrieben wird, so ist hierunter nicht nur ein linearer Ablauf einer Befehlsfolge zu verstehen, sondern auch ein modularer Ablauf von Befehlsfolgen. Je nach Zutreffen von bestimmten Bedingungen kann eine Befehlsfolge bzw. ein Modul abgearbeitet werden, so dass Sprünge und/oder Verzweigungen in der Befehlsfolge möglich sind. Insbesondere kann die Steuerung einen Bereich im Speicher mit einer Befehlsfolge aufweisen, der für die Grundfunktion der Ein- und Auslagerung mittels des Regalbediengeräts vorgesehen ist und für dessen Änderung es größerer Rechte ("Administrator-Rechte") bedarf als die Änderungen der Steuerung, die beispielsweise den Bereich umfassen, wo eine Ware und/oder ein Warenträger abgelegt ist, wo freie Bereiche im Regal vorhanden sind, wieviel eine Ware kostet und/oder wer zur Abholung einer Ware bzw. eines Guts berechtigt ist.

Der Warenträger kann zur zumindest teilweisen Aufnahme einer Ware ausgestaltet sein. Bei einem Warenträger kann es sich um einen Behälter oder ein Behältnis handeln, in den bzw. das Ware zumindest teilweise aufgelegt, abgelegt, eingesteckt oder in anderer Weise an diesem angeordnet werden kann. Vorzugsweise kann der Warenträger eine steife und/oder starre Hülle aufweisen. Der Warenträger kann als Material Pappe, Karton oder Kunststoff aufweisen, wodurch ein stabiles, gut verarbeitbares und/oder langlebiges Material verwendet werden kann. Der Warenträger kann eine chaotische Anordnung der Ware bzw. mehrerer Waren in oder an dem Warenträger ermöglichen. Der Warenträger kann ermöglichen, eine Ware in einer vorgegebenen relativen Lage zum Warenträger aufzunehmen, so dass bei Kenntnis der Ausrichtung des Warenträgers im Regal eine Ausrichtung der Ware zum Regal in mindestens einer Raumrichtung erreicht werden kann. Mittels des Warenträgers kann eine Ware in einer vorgegebenen Ausrichtung und/oder Lage relativ zum Regal bzw. Regalboden in mindestens einer Raumrichtung, vorzugsweise zwei Raumrichtungen, insbesondere drei Raumrichtungen, ausgerichtet werden. Es ist insbesondere möglich, dass mehrere Waren an bzw. in dem Warenträger angeordnet sind, so dass durch Aufnahme bzw. Handhabung des Warenträgers eine gemeinsame Handhabung der Waren mittels des Regalbediengeräts möglich ist. Es ist möglich, dass das Regalbediengerät Ware von dem Warenträger abnehmen und einzeln handhaben kann. Es ist möglich, dass das Regalbediengerät Ware, die aus oder von einem Warenträger gegriffen und aufgenommen wurde, einem anderen Warenträger mittelbar oder unmittelbar zuführen kann.

Der Warenträger kann ein Behälter oder Behältnis sein, welcher bzw., welches eine von außen zugängliche Ausnehmung aufweist, in dem die Ware bzw. das Gut zumindest teilweise angeordnet werden kann. Die Ausnehmung kann eine Öffnung aufweisen, die einen freien Zugriff auf die Ausnehmung erlaubt. Es kann alternativ oder zusätzlich vorgesehen sein, dass am Rand der Öffnung eine Abdeckung zur zumindest teilweisen Abdeckung der Ausnehmung vorgesehen ist. Es kann vorgesehen sein, dass Kontaktmittel am Rand der Öffnung vorhanden sind, mittels derer ein Kontakt möglich ist, obwohl die Öffnung und/oder die Ausnehmung geringfügig größer sein kann als die Erstreckung der Ware bzw. des Guts. Es ist beispielsweise möglich, dass am Rand der Öffnung ein Besatz mit Naturfasern, Kunstfasern, einem elastischen Kunststoff oder einem flexiblen Draht vorgesehen ist, welcher sich in die Öffnung erstreckt und der ausgestaltet ist, bei einem Einführen von Ware bzw. Gut auszuweichen, um bei eingefügter Ware bzw. Gut an der Ware bzw. dem Gut anzuliegen.

Eine Öffnung einer Ausnehmung am Warenträger kann bevorzugt von oben - und damit von einer einer Grundfläche gegenüberliegenden Seite - von außen zugänglich sein.

Der Warenträger kann eine Grundfläche aufweisen, die jedwede Form haben kann. Eine rechteckförmige Grundfläche ist aufgrund einer verbesserten Flächenausnutzung bevorzugt. Es kann vorgesehen sein, dass der Warenträger am Boden zum Aufstand auf einem Regalboden oder einem sonstigen Untergrund Füße aufweisen kann. Es kann vorgesehen sein, dass der Warenträger unmittelbar mit seiner Unterseite, insbesondere einer Grundfläche, auf einem Regalboden oder einem sonstigen Untergrund aufstehen kann.

Der Warenträger kann jedwede dreidimensionale Form aufweisen. Der Warenträger kann eine im Wesentlichen quaderförmige Außenkontur aufweisen. Eine korb-, trog- und/oder wannenförmige Ausgestaltung kann aufgrund einer einfachen und kostengünstigen Herstellung bevorzugt sein. Eine Ausnehmung am Warenträger kann genau einer Ware oder genau einem Gut zugeordnet sein; es kann vorgesehen sein, dass eine Ausnehmung mehrere Waren bzw. Güter aufnehmen kann. In einer Ausnehmung können bevorzugt mehrere Waren nebeneinander längs der Erstreckung der Ausnehmung angeordnet werden. In einer bevorzugten Ausführungsform sind mehrere Ausnehmungen am Warenträger vorhanden, die im Wesentlichen parallel zueinander angeordnet sein können. Für eine gute Gewichtsverteilung am Warenträger kann eine mittige Ausnehmung vorgesehen sein. Es kann vorgesehen sein, dass mehrere Ausnehmungen am Warenträger ausgestaltet sind, die symmetrisch am Warenträger zueinander angeordnet sein können, insbesondere zu einem Mittelpunkt und/oder einer Mittellinie des Warenträgers.

In einer bevorzugten Ausführungsform kann der Warenträger, welcher insbesondere für die Ausgabe von Artikeln verwendet wird, abgerundete Kanten aufweisen, um im Falle von mechanischen Toleranzen des Regalbediengeräts beim Anordnen bzw. Hineinschieben nicht zu verkanten. Mittels der abgerundeten Kanten kann der Warenträger zum einen an dem Manipulator gleiten und so Toleranzen ausgleichen. Zum anderen kann der für eine Ausgabe vorgesehene Warenträger aufgrund der abgerundeten Kanten in einer Ausgabevorrichtung bei einem Auslagerprozess gleiten, so dass auch dort ein Verkanten verhindert werden kann.

Der Warenträger kann variabel und/oder modulartig aufgebaut sein. Insbesondere kann der Warenträger eine Grundfläche aufweisen, auf der wannen-, korb- oder trogförmige Aufbauten modulartig aufgesetzt und/oder verrastet werden können, um in dem bzw. den wannen-, korb- oder trogförmigen Aufbauten eine oder mehrere Ausnehmungen vorzusehen, in die die Ware bzw. das Gut eingesteckt bzw. eingeführt werden kann. Auf dem Bereich der Grundplatte, der nicht mit einem Aufbau versehen ist, kann Ware und/oder Gut abgelegt werden, insbesondere chaotisch. Mittels eines modulartig zusammenstellbaren Warenträgers kann eine hohe Flexibilität erreicht werden.

In dem Warenträger kann die Ware bzw. das Gut derart angeordnet sein, dass eine bessere Raumnutzung möglich ist, wobei die Flexibilität die Ware einzeln oder zusammen mit dem Warenträger zu handhaben erhalten bleiben kann. Bevorzugt kann die Ware bzw. das Gut von oben in eine Ausnehmung des Warenträgers eingeführt werden, so dass die Ware bzw. das Gut hochkant stehend bzw. auf einer Schmalseite stehend angeordnet sein kann.

Die Oberfläche des Warenträgers kann aufgrund einer Materialwahl des Warenträgers, eines Aufbringens einer Lage oder einer Beschichtung auf den Warenträger, insbesondere im Bereich des Bodens bzw. der Aufstandsfläche, derart gestaltet sein, dass eine Kraft (Haftreibung bzw. Ruhekraft) vorhanden ist, die ein Gleiten gegenüber dem Boden bzw. der Aufstandsfläche verhindert.

Im Sinne der Beschreibung umfasst der Begriff Boden des Warenträgers in diesem Zusammenhang den Bereich des Warenträgers, der den Waren zugewandt ist und sich gegenüber der Aufstandsfläche des Warenträgers, mit der der Warenträger auf einer Fläche aufsteht an der Bodenwandung des Warenträgers, befindet. Auf den Boden werden das in dem Warenträger anzuordnende bzw. einzufüllende Gut aufgestellt bzw. aufgelegt. Der Begriff Aufstandsfläche des Warenträgers umfasst eine oder mehrere Flächen, die dem Boden, der mit dem Gut in Kontakt kommen kann, gegenüberliegt und mit der bzw. denen der Warenträger in einem Regal bzw. auf einem Regalboden aufstehen kann. Insbesondere können mehrere (Aufstands-)Flächen vorgesehen sein, wenn der Warenträger mehrere Füße aufweist, auf denen der Warenträger in einem Regal bzw. auf einem Regalboden stehen kann.

So kann eine Oberfläche bzw. Teile der Oberfläche eines Warenträgers derart ausgestaltet sein, dass mittels der Materialwahl des Warenträgers eine Haftreibung bzw. Ruhekraft ausgeübt werden kann. Die Materialwahl, die Lage und/oder die Beschichtung kann den Warenträgers als Ganzes oder auch nur Teile des Warenträgers betreffen, indem der Warenträger vollständig aus dem Material besteht oder in Abschnitten oder Bereichen das Material aufweist. Die Lage kann auf einen Warenträger eines anderen Materials auf- oder, beispielsweise in Vertiefungen, eingebracht sein, beispielsweise geklebt, so dass die Lage zumindest teilweise eine Aufstandsfläche für den Warenträger bilden kann. Der Warenträger kann auch zumindest teilweise beschichtet sein, um ein Gleiten des Guts im Warenträger und/oder ein Gleiten des Warenträgers im Regal bzw. auf einem Regalboden zu verhindern. Das Material des Warenträgers, das Material der Lage und/oder das Material der Beschichtung kann gummiartig sein, wobei eine glatte, insbesondere leicht zu reinigende Oberfläche des gummiartigen Material bevorzugt ist. Der Begriff "glatt" im Sinne der Beschreibung umfasst dabei die Ausgestaltung der Oberfläche des Materials, der Lage und/oder Beschichtung, welche(s) das Gleiten des Guts im Warenträger und/oder ein Gleiten des Warenträgers im Regal bzw. auf einem Regalboden verhindern kann, in Form einer nicht vorhandenen makroskopischen Strukturierung bzw. Profilierung.

Mittels der Materialwahl; der Lage und/oder Beschichtung des Warenträgers im Bereich des Bodens des Warenträgers, auf dem das Gut im Warenträger angeordnet werden kann, kann auf das Gut wirkenden Trägheitskräften beim Bewegen des Warenträgers, insbesondere bei einer Bewegung mittels eines Regalbediengeräts, entgegengewirkt und ein Verrutschen bzw. Gleiten vermieden werden.

In einer bevorzugten Ausführungsform weist die Oberfläche des Warenträgers eine helle Farbe auf. In einer besonders bevorzugten Ausführungsform weist der Warenträger eine Oberfläche auf, die zu mindestens 60%, bevorzugt mindestens 70%, weiter bevorzugt mindestens 80%, weiter bevorzugt mindestens 90%, weiter bevorzugt mindestens 95% eine helle Farbe, bevorzugt weiß. Der Begriff "weiß" im Sinne der Beschreibung umfasst neben der reinen Farbe "Weiß" auch Farben, die sich im Rahmen der Farblehre durch geringe Beimischungen von anderen Farben, insbesondere Ocker, Gelb und Grün, ergeben, wie beispielsweise Cremeweiß, Milchweiß, Elfenbeinfarben oder Champagnerfarben. Durch die Farbwahl des Warenträgers kann ein Kontrast gegenüber den Waren bzw. dem Gut geschaffen werden, dabei hat sich die Farbe Weiß als bevorzugt herausgestellt.

Mittels des Warenträgers kann eine verbesserte Handhabung der Ware bzw. des Guts ermöglicht werden, bspw. indem die Ware bzw. das Gut in einer Vorzugsrichtung für die Aufnahme mittels des Regalbediengeräts ausgerichtet ist. Es kann möglich sein, dass Ware in dem Warenträger aufrecht bzw. nahezu aufrecht stehen kann, die ohne Anordnung im Warenträger nicht stehen könnte.

Der Warenträger kann auch eine verbesserte optische und/oder anderweitig sensorisch erfassbare Erkennung der Ware bzw. des Guts ermöglichen, indem bspw. die Ware bzw. das Gut ausgerichtet und/oder vereinzelt ist und mittels eines Sensors abgetastet werden kann. Der Warenträger kann demnach für eine verbesserte Erkennung der Ware bzw. des Guts verwendet werden.

Der Warenträger kann auch für eine Bewegung von mehreren Waren im Warenlager verwendet werden, um bspw. mehrere Waren bzw. Güter zwischen unterschiedlichen Bereichen des Warenlagers zu bewegen bzw. zirkulieren lassen zu können. Es kann vorgesehen sein, dass die aus einem gekühlten Bereich des Warenlagers angeforderten Waren zusammen auf einem Warenträger in einen anderen Bereich des Warenlagers bewegt werden, der bspw. ein als "Trockenbereich" identifizierter Bereich ist, in dem keine Kühlung vorgesehen sein kann.

Mittels des Warenträgers kann auch für den Fall, dass Ware am Auslagerfenster nicht entnommen wird, und diese Ware bspw. zumindest teilweise Kühlprodukte enthält, der Warenträger direkt im Kühlbereich eingelagert werden, um die Kühlkette nicht zu unterbrechen. Der Warenträger kann bei einem erneuten Versuch der Abholung wieder zum Auslagerfenster bewegt werden.

Das Regal kann mehrere Regalböden aufweisen. Die Regalböden können vertikal und/oder horizontal zueinander angeordnet sein. Die Ware kann auf einem Regalboden derart abgelegt werden, dass die Regalböden in zumindest virtuell unterteilten Kanälen, die nebeneinander in Längsrichtung des Regalbodens vorliegen können, abgelegt werden können. Insbesondere können gleichartige bzw. gleiche Waren in einem Kanal hintereinander, insbesondere quer zur Längsrichtung des Regalbodens, angeordnet werden. Eine chaotische Lagerung von Ware ist möglich.

In einer bevorzugten Ausführungsform sind auf einem Regalboden sowohl Ware als auch mindestens ein Warenträger angeordnet. Hierdurch wird die Möglichkeit geschaffen, dass nicht nur Ware und Warenträger in ein und demselben Regal abgelegt werden können, sondern dass sowohl die Ware als auch ein Warenträger auf ein und demselben Regalboden angeordnet werden können. Die Zugriffszeiten können angepasst werden bzw. Kriterien für die Sortierung in dem Warenlager sind möglich, die über die Einordnung "Ware" oder "Warenträger" hinausgehen. Das Warenlager kann effizient genutzt werden.

Die Erfindung schafft auch ein Verfahren zum Betreiben eines automatischen Warenlagers mit einem Regalbediengerät mit einer Steuerung, wobei das Regalbediengerät Ware direkt oder in bzw. auf einem Warenträger im Regal ablegt. Eine effiziente und wirtschaftlich einfache Möglichkeit zur Nutzung des Warenlagers ist möglich.

In einer bevorzugten Ausführungsform handhabt das Regalbediengerät wahlweise Ware oder einen Warenträger mit Ware in dem Regal. Hierdurch kann die Möglichkeit geschaffen werden, dass das Regalbediengerät Ware und Warenträger gleich handhabt und für die Steuerung im Wesentlichen kein Unterschied gemacht wird, ob das Regalbediengerät eine Ware selbst oder einen Warenträger handhabt.

In einer bevorzugten Ausführungsform kann Ware vom Warenträger im Regal mittels des Regalbediengeräts entnommen werden, wodurch ein erhöhter Grad der Flexibilität geschaffen wird. Die zuvor vorliegende Einteilung von Warenlager, in dem die Ware einzeln oder in einem Behälter angeordnet vorliegt, wird um einen weiteren Flexibilitätsgrad durchbrochen, in dem nunmehr auch Ware von dem Warenträger genommen werden kann. Es wird möglich, beispielsweise bei der Einlagerung Ware, die in einem Warenträger vorliegt, als ganzes zu handhaben, um beispielsweise den Einlagerungsprozess zu beschleunigen und/oder die Lagerfläche zu minimieren, wobei aber durch die mögliche Entnahme einer Ware aus einem Warenträger die zusätzliche Möglichkeit geschaffen wird, die bei der Einlagerung vorhandene Einheit aufzulösen.

In einer bevorzugten Ausführungsform wird die Ware in dem Warenträger vorkommissioniert, wodurch beispielsweise ein Auslagerungsprozess von Ware beschleunigt werden kann. Es ist beispielsweise möglich, dass an das automatische Warenlager eine Liste mit mehreren Waren übergeben wird, die zumindest im Wesentlichen vollständig in einmal ausgelagert werden sollen. Das Regalbediengerät kann in diesem Falle zunächst eine Sammlung in dem Warenträger vorsehen und dann den Warenträger komplett mit der darin gesammelten Ware zur Auslagerungsstation bringen.

Der Warenträger kann dazu dienen bzw. verwendet werden, eine Bestellung, die, aus welchen Gründen auch immer, nicht entnommen wurde, wieder in das Warenlager einzulagern. Es kann vorgesehen sein, dass die wieder eingelagerte Ware zu einem späteren Zeitpunkt wieder auf Anforderung ausgelagert werden kann. Es kann für den Fall, dass es sich um verderbliche Ware oder um Ware, die möglichst nicht anderen gegenüber exponiert werden soll, handelt, vorgesehen sein, dass der Warenträger mit der Ware einer speziellen Position im Warenlager zugeführt werden kann, die bspw. für eine Ausgabe blockiert ist, da nicht ausgeschlossen werden kann, dass die Ware verdorben ist und/oder der ursprünglich Anfordernde die Ware bzw. das Gut manipuliert hat. Eine von der Ausgabe gesperrte Ware bzw. Gut kann im Zuge von Befüllungs- /Wartungsroutinen aus dem Warenlager entfernt werden.

Es kann vorgesehen sein, dass der Warenträger zusammen mit der Ware ausgegeben werden kann. Es kann aber auch vorgesehen sein, dass der Warenträger im automatischen Warenlager verbleibt und nur die Ware ausgegeben wird.

Die Erfindung schafft auch eine Verwendung eines Regals eines automatischen Warenlagers mit einem Regalbediengerät und einer Steuerung, wobei das Regal dazu verwendet wird, Ware einzeln oder auf bzw. in einem Warenträger abzulegen.

In einer bevorzugten Ausführungsform wird der Warenträger für eine Orientierung und/oder Ausrichtung von Ware verwendet. Insbesondere kann die Ware mittels des Warenträgers hinsichtlich ihrer Orientierung und/oder Ausrichtung relativ zum Regal bzw. Regalboden angeordnet werden, in dem der Warenträger in einer bestimmten Ausrichtung bzw. Orientierung auf dem Regalboden angeordnet wird.

In einer bevorzugten Ausführungsform wird der Warenträger zur Vorkommissionierung verwendet, um beispielsweise eine Auslagerung von Ware aus dem Warenlager zu beschleunigen.

In einer bevorzugten Ausführungsform wird der Warenträger zur Ausgabe verwendet, so dass der Warenträger selbst an sich zusammen mit der Ware zur Ausgabestation mittels des Regalbediengeräts bewegt wird.

Die Ausführungen zu den einzelnen Aspekten der Erfindung, wie sie in Bezug auf das automatische Warenlager, das Verfahren zum Betreiben eines automatischen Warenlagers und der Verwendung eines Regals eines automatischen Warenlagers beschrieben werden, sind als einander ergänzende Ausführungen zu verstehen.

Ausführungen zu einem der Aspekte gelten auch für die Ausführungen für die anderen Aspekte.

Die vorstehenden Ausführungen stellen ebenso wie die nachfolgende Beschreibung beispielhafter Ausführungsformen keinen Verzicht auf bestimmte Ausführungsformen oder Merkmale dar.

Die Erfindung wird nachfolgend anhand eines in den Zeichnungen dargestellten Ausführungsbeispiels näher erläutert.
- Figur 1: eine schematische Darstellung eines automatischen Warenlagers mit einem Regalbediengerät und einem Regal;
- Figur 2: einen Warenträger mit einer darin angeordneten Ware in isometrischer Darstellung;
- Figur 3: eine weitere Ausführungsform eines Warenträgers mit einer darin angeordneten Ware in einer isometrischen Darstellung;
- Figur 4: eine weitere Ausführungsform eines Warenträgers mit einer darin angeordneten Ware in isometrischer Darstellung;
- Figur 5: eine weitere Ausführungsform eines Warenträgers in einer Ansicht von vorne;
- Figur 6: den Warenträger gemäß Figur 5 mit einem auf der Oberfläche angeordneten Modul; und
- Figur 7: den Warenträger gemäß Figur 6 in einer isometrischen Darstellung.

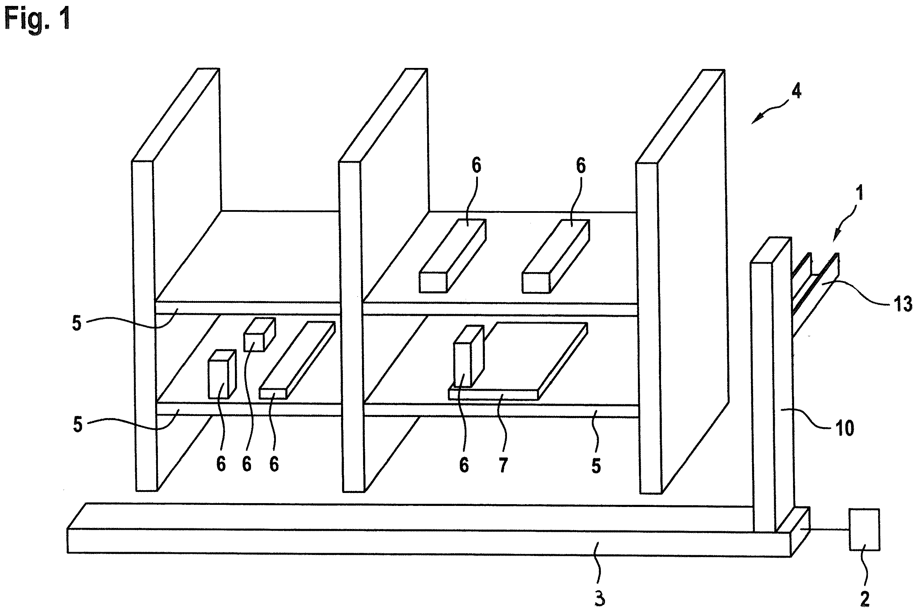

Figur 1 zeigt schematisch in einer isometrischen Darstellung ein automatisches Warenlager mit einem Regalbediengerät 1, welches von einer Steuerung 2 gesteuert werden kann. Das Regalbediengerät 1 läuft auf einer Schiene 3 vor einem Regal 4 entlang. Das Regal 4 weist Regalböden 5 auf, auf denen Ware 6 direkt aufliegen kann.

Auf dem in der Figur 1 gezeigten rechten unteren Regalboden 5 ist die Ware 6 in einem Warenträger 7 angeordnet und steht damit nicht direkt auf dem Regalboden 5 auf, sondern mittelbar über den Warenträger 7. Damit ist in dem Regal 4 sowohl Ware 6 als auch ein Warenträger 7 angeordnet. Es kann vorgesehen sein, dass auf einem Regalboden 5 des Regals 4 sowohl eine Ware 6 als auch ein Warenträger (mit oder ohne Ware 6) angeordnet sein kann.

Mittels des Regalbediengeräts 1, welches einen Greifer 13 aufweist, kann sowohl die Ware 6 als auch der Warenträger 7 im Regal 4 gehandhabt werden.

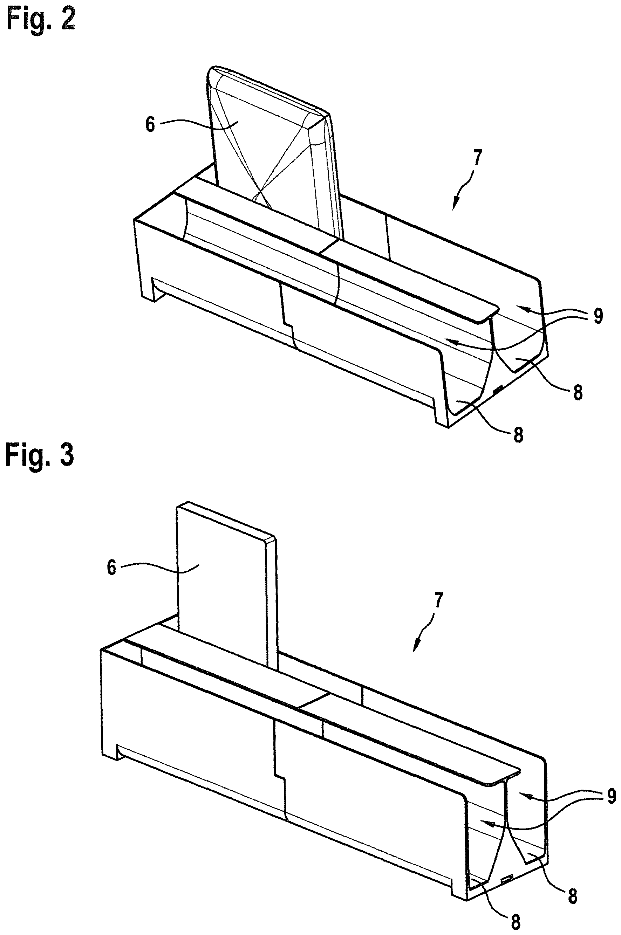

Figur 2 zeigt in einer vergrößerten Darstellung einen Warenträger 7 mit einer darin angeordneten Ware 6. Der Warenträger 7 ist mit einer quaderförmigen Außenkontur und einer rechteckförmigen Grundfläche ausgestaltet. Der Warenträger 7 weist zwei Ausnehmungen 8 auf, die im Wesentlichen parallel zueinander längs der Längsachse des Warenträgers 7 verlaufen. Die Ausnehmungen 8 sind mittels einer oben am Warenträger 7 angeordneten Öffnung 9 ausgestaltet, in die die Ware 6 eingeführt bzw. eingesteckt werden kann. Die Ware 6 steht auf einer Schmalseite in der Ausnehmung 8 auf. Bei der in Figur 2 dargestellten Ware 6 kann es sich um einen Beutel handeln, der ohne den Warenträger 7 sonst umfallen könnte.

Figur 3 zeigt in einer isometrischen Darstellung eine weitere Ausführungsform eines Warenträgers 7, in dem sich eine plattenförmige Ware 6 befindet. Gleiche Bezugszeichen in der Figur 3 bezeichnen eine gleiche Ausgestaltung des Warenträgers 7 wie in Figur 2.

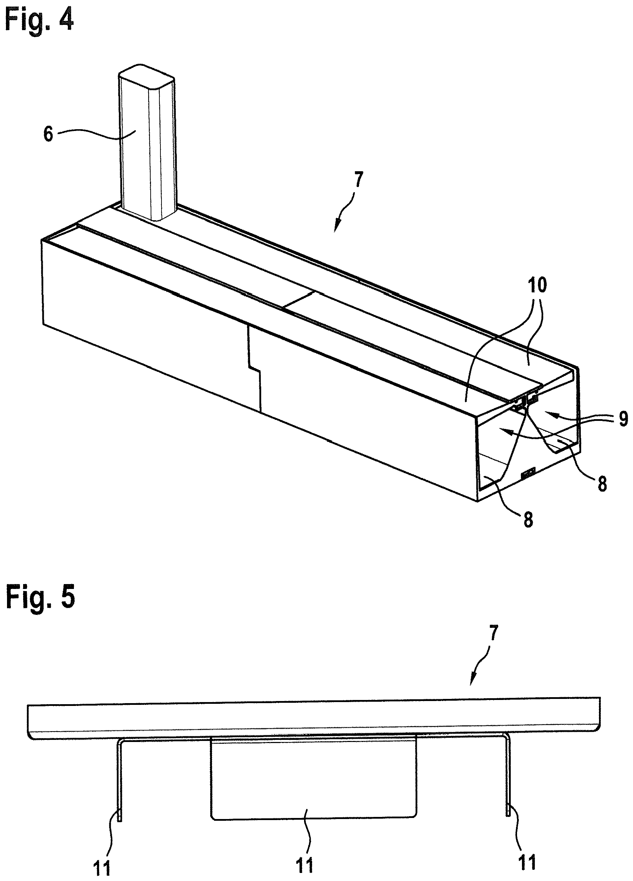

Figur 4 zeigt in einer isometrischen Darstellung einen Warenträger 7 mit einer Ware 6, wobei im Unterschied zu den Ausführungsbeispielen der Figuren 2 und 3 die Öffnung 9 der Ausnehmung 8 jeweils mit einem sich in die Mitte der Öffnung 9 vom Rand erstreckenden Borstenbesatz zumindest teilweise verdeckt ist. Die Borsten 10 des Borstenbesatzes, der, wenn die Ware 6 in die Ausnehmung 8 eingeführt wird, die Öffnung 9 freigibt, liegen an der Ware 6 an, wenn die Ware 6 in der Ausnehmung 8 befindlich ist.

Figur 5 zeigt in einer Ansicht von vorne ein weiteres Ausführungsbeispiel für den Warenträger 7. Der Warenträger 7 gemäß der Ausführungsform von Figur 5 ist wannenförmig ausgestaltet. Der wannenförmige Warenträger 7 der Figur 5 weist im Wesentlichen eine quadratische Grundfläche auf. Am Warenträger 7 sind sich nach außen erstreckende Füße 11 am Boden vorgesehen, auf denen der Warenträger 7 aufstehen kann.

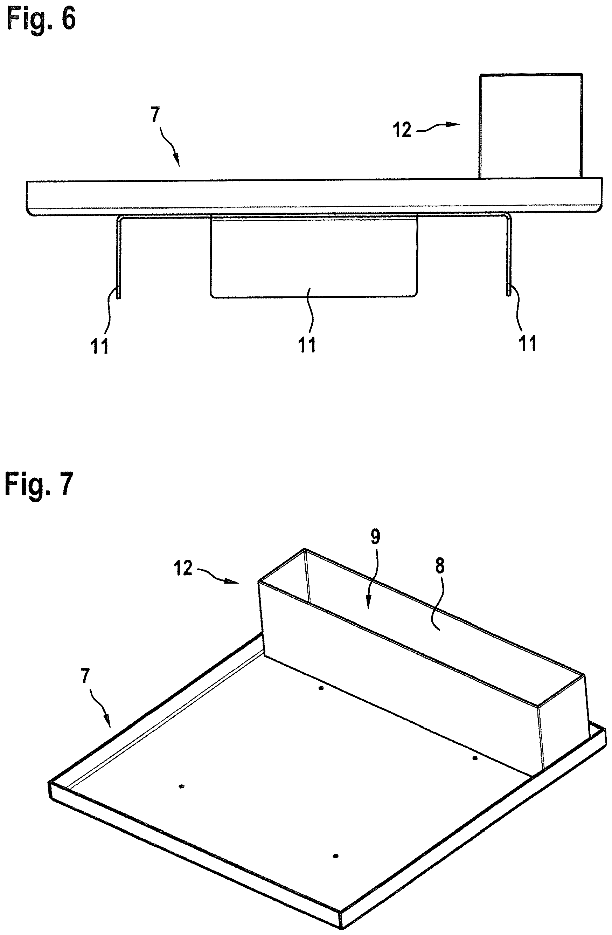

Figur 6 zeigt die Ausführungsform gemäß Figur 5 ebenfalls in einer Ansicht von vorne, wobei innerhalb der Wanne des wannenförmigen Warenträgers 7 ein Aufbau 12 vorgesehen ist, der modulartig auf dem Warenträger 7 aufgebaut wurde. Der Figur 7, die die Ausführungsform des Warenträgers 7 von Figur 6 in einer isometrischen Ansicht zeigt, ist zu entnehmen, dass mittels des Aufbaus 12 ein Modul bereitgestellt wird, welches eine Ausnehmung 8 mit einer Öffnung 9 aufweist, in die nicht dargestellte Ware 6 eingesteckt werden kann. Auf dem Bereich des Warenträgers 7 außerhalb des Aufbaus 12 kann nicht dargestellte Ware abgelegt werden.

## Patentansprüche

1. Automatisches Warenlager mit einem Regalbediengerät (1) und einer Steuerung (2), **dadurch gekennzeichnet, dass** die Steuerung (2) dazu ausgestaltet ist, die Ware (6) einzeln oder auf bzw. in einem Warenträger (7) im Regal (4) abzulegen.

2. Automatisches Warenlager nach Anspruch 1, wobei auf einem Regalboden (5) sowohl Ware (6) als auch mindestens ein Warenträger (7) angeordnet sind.

3. Verfahren zum Betreiben eines automatischen Warenlagers mit einem Regalbediengerät (1) mit einer Steuerung (2), wobei das Regalbediengerät (1) Ware (6) direkt oder in bzw. auf einem Warenträger (7) im Regal (4) ablegt.

4. Verfahren nach Anspruch 3, wobei das Regalbediengerät (1) wahlweise Ware (6) oder einen Warenträger (7) mit Ware (6) in dem Regal (4) handhabt.

5. Verfahren nach Anspruch 3 oder 4, wobei Ware (6) vom Warenträger (7) im Regal (4) entnommen werden kann.

6. Verfahren nach einem der Ansprüche 3 bis 5, wobei Ware (6) in dem Warenträger (7) vorkommissioniert wird.

7. Verwendung eines Regals (4) eines automatischen Warenlagers mit einem Regalbediengeräts (1) und einer Steuerung (2), wobei das Regal (4) dazu verwendet wird, Ware (6) einzeln oder auf bzw. in einem Warenträger (7) abzulegen.

8. Verwendung nach Anspruch 7, wobei der Warenträger (7) für eine Orientierung und/oder Ausrichtung von Ware (6) verwendet wird.

9. Verwendung nach Anspruch 7 oder 8, wobei der Warenträger (7) zur Vorkommissionierung verwendet wird.

10. Verwendung nach einem der Ansprüche 7 bis 9, wobei der Warenträger (7) zur Ausgabe verwendet wird.
